# EUROPÄISCHE PATENTSCHRIFT

(11) **EP 3 463 955 B1**
(45) Veröffentlichungstag und Bekanntmachung des Hinweises auf die Patenterteilung: **05.02.2020**
(21) Anmeldenummer: 17723699.9
(22) Anmeldetag: 16.05.2017
(51) Int. Cl.: B60J 10/70

(54) **PROFILLEISTENANORDNUNG, MONTAGEBAUGRUPPE, KRAFTFAHRZEUGBAUGRUPPE UND VERFAHREN ZUR MONTAGE EINER KRAFTFAHRZEUGBAUGRUPPE**
PROFILED STRIP ARRANGEMENT, MOUNTING ASSEMBLY, MOTOR VEHICLE ASSEMBLY AND METHOD FOR MOUNTING A MOTOR VEHICLE ASSEMBLY
ENSEMBLE BAGUETTE PROFILÉE, MODULE DE MONTAGE, MODULE DE VÉHICULE À MOTEUR ET PROCÉDÉ POUR LE MONTAGE D'UN MODULE DE VÉHICULE À MOTEUR

(30) Priorität: 24.05.2016 DE 102016109471
(43) Veröffentlichungstag der Anmeldung: 10.04.2019
(73) Patentinhaber: Elkamet Kunststofftechnik GmbH, 35216 Biedenkopf (DE)
(72) Erfinder: BERGMANN, Lutz, 35630 Ehringshausen (DE); BURK, Carsten, 35232 Dautphetal (DE); HAIN, Christoph, 35236 Breidenbach (DE); HAIN, Marco, 35713 Eschenburg (DE); LANDECK, David, 35037 Marburg (DE); LOEHNERT, Jens, 35102 Lohra (DE); ORTMUELLER, Michael, 35232 Dautphetal-Herzhausen (DE); ROTH, Hartmut, 35216 Biedenkopf (DE); SCHNEIDER, Marcus, 35232 Dautphetal (DE)
(74) Vertreter: DREISS Patentanwälte PartG mbB
(86) Internationale Anmeldenummer: PCT/EP2017/061692
(87) Internationale Veröffentlichungsnummer: WO 2017/202645

(56) Entgegenhaltungen:
- EP-A2- 2 586 638
- FR-A- 1 388 582

## Beschreibung

Die Erfindung betrifft eine Profilleistenanordnung gemäß dem Oberbegriff des Patentanspruchs 1. Eine solche Profilleistenanordnung ist aus der FR 1 388 582 A bekannt.

Die Erfindung betrifft ferner eine Montagebaugruppe, umfassend eine Profilleistenanordnung und eine Windschutzscheibe.

Die Erfindung betrifft ferner eine Kraftfahrzeugbaugruppe, umfassend ein angrenzendes Kraftfahrzeugbauteil in Form einer Wasserkastenabdeckung, ferner umfassend eine Profilleistenanordnung oder eine Montagebaugruppe.

Die Erfindung betrifft ferner ein Verfahren zur Montage einer Kraftfahrzeugbaugruppe.

Aus dem Stand der Technik, beispielsweise aus der DE 200 08 555 U1 und der DE 20 2008 006 986 U1, bekannte Profilleisten dienen dazu, einen unteren Randbereich einer Windschutzscheibe eines Kraftfahrzeugs mit einem angrenzenden Kraftfahrzeugbauteil zu verbinden. Bei dem angrenzenden Kraftfahrzeugbauteil handelt es sich insbesondere um eine sogenannte Wasserkastenabdeckung, welche üblicherweise mit der Profilleiste verrastet wird. Eine Wasserkastenabdeckung dient zur Abdeckung eines Wasserkastens, der von der Fahrzeugscheibe abfließendes Wasser aufnimmt und kontrolliert in den Motorraum und unter das Fahrzeug ableitet. Der Wasserkasten kann Bestandteil der Fahrzeugkarosserie sein.

Die Profilleiste wird nach ihrer Herstellung mit dem Randbereich der Windschutzscheibe verbunden, insbesondere verklebt. Dieser Montageschritt wird üblicherweise bei Zulieferern durchgeführt, sodass die Zulieferer einem Kraftfahrzeughersteller eine Baugruppe liefern können, welche die Windschutzscheibe und die mit der Windschutzscheibe verbundene Profilleiste umfasst. Diese Baugruppe wird dann im Rahmen einer Endmontage eines Kraftfahrzeugs mit einer Windschutzscheibenaufnahme einer Kraftfahrzeugkarosserie verbunden; außerdem wird das angrenzende Kraftfahrzeugbauteil mit der Profilleiste gefügt.

Während des Transports der vorstehend genannten Baugruppe von dem Zulieferer zu dem Kraftfahrzeughersteller steht der zweite Verbindungsbereich der Profilleiste von der Windschutzscheibe ab und ist somit mechanischen Einflüssen ausgesetzt. Gleichzeitig ist es erwünscht, dass die Baugruppe platzsparend und "stehend" transportiert werden kann, dass also die Windschutzscheibe hochkant transportiert werden kann. Außerdem ist es erwünscht, dass die Windschutzscheibe während des Transports gegen eine Beschädigung des unteren Randbereichs geschützt ist. Ein solcher Schutz ist dadurch gewährleistet, dass sich die Windschutzscheibe während ihres Transports auf der Profilleiste abstützt. Dies bedeutet aber, dass das Gewicht der Windschutzscheibe während des Transports der Baugruppe auf der Profilleiste lastet. Diese Belastung bewirkt eine unerwünschte Verformung des zweiten Verbindungsbereichs der Profilleiste.

Zur Vermeidung einer Verformung einer mit einer Windschutzscheibe verbundenen Profilleiste ist es aus dem Stand der Technik (beispielsweise aus der WO 2006/002891 A2, der EP 2 253 556 A1, der EP 2 586 638 A2 und der WO 2014/041279 A1) bekannt, den zweiten Verbindungsbereich mit einer Versteifungsleiste (auch "Keder" genannt) zu versteifen. Eine solche Versteifungsleiste wird in einen Aufnahmeraum des zweiten Verbindungsbereichs eingebracht, sodass der Aufnahmeraum mit Hilfe des Materials der Versteifungsleiste versteift wird, wodurch eine Verformung des zweiten Verbindungsbereichs zumindest weitestgehend verhindert wird.

Nach Anlieferung der Baugruppe "Windschutzscheibe und Profilleiste" bei dem Kraftfahrzeughersteller wird die Versteifungsleiste wieder aus dem zweiten Verbindungsbereich der Profilleiste entfernt, damit der zweite Verbindungsbereich mit dem angrenzenden Kraftfahrzeugbauteil, insbesondere mit der Wasserkastenabdeckung, verbunden werden kann. Die Versteifungsleiste wird anschließend entsorgt.

Zur Entfernung der Versteifungsleiste aus dem zweiten Verbindungsbereich schlägt die EP 2 253 556 A1 vor, an der Versteifungsleiste einen zusätzlichen Handhabungsabschnitt in Form einer Grifflasche vorzusehen, sodass die Versteifungsleiste durch manuelles Ziehen an der Grifflasche aus dem zweiten Verbindungsbereich herausgezogen werden kann. Ein ähnlicher Handhabungsabschnitt in Form eines Ausziehrings ist aus der WO 2014/041279 A1 bekannt.

Die vorstehend genannten, zusätzlichen Handhabungsabschnitte vereinfachen die Entfernung der Versteifungsleiste aus dem zweiten Verbindungsbereich der Profilleiste. Die Versteifungsleiste und die Handhabungsabschnitte müssen aber zunächst als Einzelteile hergestellt werden und dann vom Zulieferer an der Profilleiste montiert werden. Nach dem Transport der Baugruppe zu dem Kraftfahrzeughersteller muss der Kraftfahrzeughersteller die Versteifungsleiste und die Handhabungsabschnitte dann wieder demontieren. Schließlich müssen die Versteifungsleiste und die Handhabungsabschnitte gesammelt und entsorgt werden.

Hiervon ausgehend liegt der vorliegenden Erfindung die Aufgabe zugrunde, eine Profilleistenanordnung, eine Montagebaugruppe, eine Kraftfahrzeugbaugruppe und ein Verfahren zur Montage einer Kraftfahrzeugbaugruppe anzugeben, mit welchen bzw. welchem der im Zusammenhang mit der Handhabung der Versteifungsleiste entstehende Aufwand reduziert werden kann.

Diese Aufgabe wird erfindungsgemäß durch die kennzeichnenden Merkmale des Patentanspruchs 1 gelöst.

Die vorstehend genannte Aufgabe wird bei einem Verfahren zur Montage einer Kraftfahrzeugbaugruppe erfindungsgemäß dadurch gelöst, dass
- der Einsteckabschnitt der Versteifungsleiste in den zweiten Verbindungsbereich der Profilleiste eingesteckt wird, nachdem oder bevor die Profilleiste mit einem Randbereich einer Windschutzscheibe verbunden wird,
   und dass anschließend
- das angrenzende Kraftfahrzeugbauteil in Form der Wasserkastenabdeckung mit der Versteifungsleiste verbunden wird.

Erfindungsgemäß erfüllt die Versteifungsleiste eine Doppelfunktion. Während des Transports einer Montagebaugruppe ist die Profilleiste dadurch gegen eine Verformung geschützt, dass der Einsteckabschnitt der Versteifungsleiste in dem zweiten Verbindungsbereich angeordnet ist. Die Versteifungsleiste wird nach Abschluss des Transports allerdings nicht aus dem zweiten Verbindungsbereich entfernt, sondern der Einsteckabschnitt verbleibt dauerhaft in dem zweiten Verbindungsbereich und wird mittels eines Verbindungsabschnitts der Versteifungsleiste mit dem angrenzenden Kraftfahrzeugbauteil verbunden. Auf diese Weise bildet die Versteifungsleiste nicht nur einen Transportschutz, sondern ist nach der Endmontage eines Kraftfahrzeugs dauerhafter Bestandteil einer Kraftfahrzeugbaugruppe, welche das angrenzende Kraftfahrzeugbauteil in Form der Wasserkastenabdeckung umfasst.

Erfindungsgemäß ist vorgesehen, dass in einem unmontierten Zustand der Profilleistenanordnung der Einsteckabschnitt der Versteifungsleiste in seinem in den zweiten Verbindungsbereich eingesteckten Zustand einen Transportschutz für den zweiten Verbindungsbereich bildet und dass in einem an einem Kraftfahrzeug montierten Zustand der Profilleistenanordnung die Versteifungsleiste eine Anordnung zur Verbindung der Wasserkastenabdeckung mit der Profilleiste bildet.

Die erfindungsgemäße Ausgestaltung der Profilleistenanordnung, sowie einer Montagebaugruppe, die eine Windschutzscheibe umfasst, sowie einer Kraftfahrzeugbaugruppe, die ein angrenzendes Kraftfahrzeugbauteil umfasst, hat den wesentlichen Vorteil, dass die Versteifungsleiste nach ihrer Verbindung mit dem zweiten Verbindungsbereich der Profilleiste nicht mehr von der Profilleiste entfernt werden muss.

Die Versteifungsleiste der Profilleistenanordnung weist insbesondere keinen Handhabungsabschnitt zum Lösen der Versteifungsleiste von der Profilleiste auf. Demnach kann die Herstellung und Montage eines Handhabungsabschnitts entfallen.

Dadurch, dass die Versteifungsleiste an der Profilleiste verbleibt, müssen die Versteifungsleisten auch nicht gesammelt und wieder entsorgt werden. Das Materialvolumen, das zur Herstellung der Versteifungsleiste benötigt wird, kann bei dem angrenzenden Kraftfahrzeugbauteil, welches um ein entsprechendes Materialvolumen kleiner ausgelegt werden kann, wieder eingespart werden.

Aus Sicht des Kraftfahrzeugherstellers bedeutet dies, dass eine Montagebaugruppe, umfassend eine Profilleistenanordnung und eine Windschutzscheibe, angeliefert wird und dass dann der Montageschritt zur Entfernung der Versteifungsleiste von der Profilleiste entfällt. Der Kraftfahrzeughersteller muss lediglich ein (verkleinertes) angrenzendes Kraftfahrzeugbauteil mit der Versteifungsleiste verbinden. Diesen Montageschritt kann der Kraftfahrzeughersteller durchführen, nachdem oder bevor die Windschutzscheibe mit einer Windschutzscheibenaufnahme des Kraftfahrzeugs verbunden wird. Der vorstehend beschriebene Montageschritt ersetzt den bei konventionellen Profilleistenanordnungen erforderlichen, vom Aufwand her vergleichbaren Montageschritt, bei welchem ein (größeres) angrenzendes Kraftfahrzeugbauteil mit dem (von einer Versteifungsleiste befreiten) zweiten Verbindungsbereich der Profilleiste verbunden wird.

Die Versteifungsleiste und die Profilleiste sind lösbar miteinander verbunden. Insbesondere ist der Einsteckabschnitt mittels einer Rastverbindung in dem zweiten Verbindungsbereich festgelegt. Nach Verbindung des Verbindungsabschnitts der Versteifungsleiste mit dem angrenzenden Kraftfahrzeugbauteil bildet die Rastverbindung dann eine lösbare Verbindungseinrichtung für das angrenzende Kraftfahrzeugbauteil relativ zu der Profilleiste.

Besonders bevorzugt ist es, dass die Geometrie des Einsteckabschnitts der Versteifungsleiste einer Geometrie entspricht, die aus der DE 20 2008 006 986 U1 für einen Einsteckabschnitt des angrenzenden Kraftfahrzeugbauteils bekannt geworden ist. In entsprechender Weise ist es bevorzugt, dass die Profilleiste eine Rastaufnahme aufweist, welche sich für die lösbare Fixierung eines angrenzenden Kraftfahrzeugbauteils bewährt hat und welche ebenfalls aus der DE 20 2008 006 986 U1 bekannt ist und ein an der Profilleiste festgelegtes, widerhakenförmiges Rastelement umfasst, dass mit einer Rastelementaufnahme der Versteifungsleiste zusammenwirkt.

Bezüglich des Aufbaus und der Funktionsweise einer solchen Rastverbindung wird hiermit Bezug genommen auf den Inhalt der DE 20 2008 006 986 U1.

Nachfolgend werden bevorzugte Verbindungsmöglichkeiten zur Verbindung der Versteifungsleiste mit dem angrenzenden Kraftfahrzeugbauteil beschrieben. Diese Verbindungsmöglichkeiten bilden jeweils eine sogenannte "erste Verbindungseinrichtung", während die vorstehend beschriebene Verbindung zwischen der Versteifungsleiste und der Profilleiste eine sogenannte "zweite Verbindungseinrichtung" bildet.

Für die genannte erste Verbindungseinrichtung ist es nach einer Ausführungsform der Erfindung bevorzugt, dass der Verbindungsabschnitt einen Stoffschlussabschnitt zur stoffschlüssigen Verbindung mit dem angrenzenden Kraftfahrzeugbauteil aufweist. Beispielsweise weist der Verbindungsabschnitt einen Verschweißungsabschnitt auf, der nach einer Verschweißung mit dem angrenzenden Kraftfahrzeugbauteil eine Schweißverbindung zwischen dem Versteifungsabschnitt und dem angrenzenden Kraftfahrzeugbauteil ausbildet. Bevorzugte Schweißverfahren sind Laserschweißen, Reib- oder Vibrationsschweißen, Spiegelschweißen, Schweißen durch Wärmeeintrag von in das Material des angrenzenden Kraftfahrzeugbauteils und/oder der Versteifungsleiste eingebetteten Zusatzelementen (Widerstandselementen), Induktionsschweißen.

Insbesondere für den Fall, dass der Verbindungsabschnitt der Versteifungsleiste als Stoffschlussabschnitt ausgebildet ist, ist es bevorzugt, dass - in dem in den zweiten Verbindungsbereich eingesteckten Zustand des Einsteckabschnitts - der Verbindungsabschnitt der Versteifungsleiste relativ zu einer Außendichtfläche der Profilleiste zurückversetzt ist, wobei - in dem mit der Profilleiste verbundenen Zustand des angrenzenden Kraftfahrzeugbauteils - eine Außenfläche des Kraftfahrzeugbauteils und die Außendichtfläche auf gleicher Höhe angeordnet sind. Dies bedeutet, dass der Versatz zwischen dem Verbindungsabschnitt und der Außendichtfläche der Profilleiste auf die Dicke des angrenzenden Kraftfahrzeugbauteils derart abgestimmt ist, dass nach Montage des angrenzenden Kraftfahrzeugbauteils eine miteinander bündige Außenfläche geschaffen werden kann, welche die Außenfläche des Kraftfahrzeugbauteils und die Außendichtfläche der Profilleiste umfasst. In diesem Zusammenhang ist es insbesondere bevorzugt, dass auch eine Außenfläche der Windschutzscheibe sich bündig anschließt, sodass eine insgesamt flächenbündige Anordnung gebildet wird, welche die nach außen weisenden Oberflächen des angrenzenden Kraftfahrzeugbauteils, eines Dichtabschnitts der Profilleiste und der Außenfläche der Windschutzscheibe umfasst.

Eine weitere Möglichkeit zur Verbindung der Versteifungsleiste mit dem angrenzenden Kraftfahrzeugbauteil besteht darin, ein Zwischenelement zu verwenden, welches mit dem Verbindungsabschnitt verbunden ist und als Teil einer Kraftfahrzeugbaugruppe auch mit dem angrenzenden Kraftfahrzeugbauteil verbunden ist. Ein solches Zwischenelement hat den Vorteil, dass es im Hinblick auf eine jeweilige Verbindungsmöglichkeit zu der Versteifungsleiste und/oder zu dem angrenzenden Kraftfahrzeugbauteil hin optimiert werden kann.

Beispielsweise handelt es sich bei dem Zwischenelement um einen Verklebungsabschnitt. Ein solcher Verklebungsabschnitt kann insbesondere an dem Verbindungsabschnitt der Versteifungsleiste vorgehalten werden, insbesondere um einem Kraftfahrzeughersteller den sich anschließenden Montageschritt der Verbindung mit dem angrenzenden Kraftfahrzeugbauteil zu erleichtern. Bei dem Verklebungsabschnitt kann es sich um eine Verklebungsmasse oder um ein Klebeband, insbesondere um ein doppelseitig klebendes Klebeband, handeln. Es kann auch ein hitzeaktiviertes Klebeband verwendet werden.

Wenn das Zwischenelement einen Verklebungsabschnitt umfasst oder durch einen solchen gebildet ist, ist es bevorzugt, wenn eine von dem Verklebungsabschnitt abziehbare Abdeckschicht vorgesehen ist. Eine solche Abdeckschicht schützt den Verklebungsabschnitt während des Transports der die Profilleiste, die Versteifungsleiste und die Windschutzscheibe umfassenden Montagebaugruppe. Die Abdeckschicht kann dann kurz vor der Montage des angrenzenden Kraftfahrzeugbauteils abgezogen werden.

Zusätzlich oder alternativ zu den vorstehend beschriebenen Verbindungsmöglichkeiten kann der Verbindungsabschnitt der Verbindungsleiste auch einen Formschlussabschnitt zur formschlüssigen Verbindung mit dem angrenzenden Kraftfahrzeugbauteil oder mit einem mit dem angrenzenden Kraftfahrzeugbauteil verbindbaren Zwischenelement aufweisen. Unter einer formschlüssigen Verbindung wird im Rahmen der vorliegenden Erfindung verstanden, dass der Formschluss in zumindest einer Formschlussebene wirksam ist. Dabei ist es möglich, jedoch nicht zwingend, dass der Formschluss Formschlussabschnitte umfasst, welche gemeinsam einen Hinterschnitt bilden. Ein solcher Hinterschnitt kann Teil einer Verrastung zwischen dem Verbindungsabschnitt der Versteifungsleiste und einem Verbindungsabschnitt des angrenzenden Kraftfahrzeugbauteils sein.

Wie vorstehend erörtert, sind das angrenzende Kraftfahrzeugbauteil und die Versteifungsleiste mittels einer ersten Verbindungseinrichtung miteinander verbunden. Eine zweite Verbindungseinrichtung ist zwischen dem Einsteckabschnitt der Versteifungsleiste und dem zweiten Verbindungsbereich der Profilleiste wirksam. Vorzugsweise sind die genannten ersten und zweiten Verbindungseinrichtungen derart ausgelegt, dass eine Betätigungskraft zum Lösen der ersten Verbindungseinrichtung höher ist als eine Betätigungskraft zum Lösen der zweiten Verbindungseinrichtung. Auf diese Weise bewirkt eine auf die Kraftfahrzeugbaugruppe ausgeübte Demontagekraft zunächst ein Lösen der zweiten Verbindungseinrichtung und nicht ein Lösen der ersten Verbindungseinrichtung. Dies hat zur Folge, dass eine Demontagekraft dafür sorgt, dass ein angrenzendes Kraftfahrzeugbauteil gemeinsam mit der Versteifungsleiste von der Profilleiste abgetrennt werden kann. Ein unabsichtliches Trennen der Verbindung zwischen dem angrenzenden Kraftfahrzeugbauteil und der Versteifungsleiste kann also vermieden werden.

Insbesondere ist es bevorzugt, dass die erste Verbindungseinrichtung nicht zerstörungsfrei lösbar ist. Hierdurch ist berücksichtigt, dass die Versteifungsleiste nach Verbindung mit dem angrenzenden Kraftfahrzeugbauteil einen zusätzlichen Bestandteil des angrenzenden Kraftfahrzeugbauteils bilden soll, welcher gemeinsam mit dem angrenzenden Kraftfahrzeugbauteil gehandhabt werden kann. Auf diese Weise kann das angrenzende Kraftfahrzeugbauteil mit der damit verbundenen Versteifungsleiste von einem Monteur so gehandhabt werden, als wenn es sich nur um "ein Bauteil" handelt.

Weitere Merkmale und Vorteile der Erfindung sind Gegenstand der nachfolgenden Beschreibung und der zeichnerischen Darstellung bevorzugter Ausführungsbeispiele.

In der Zeichnung zeigt
- Fig. 1: eine Seitenansicht einer Ausführungsform einer Kraftfahrzeugbaugruppe;
- Fig. 2: eine Seitenansicht einer weiteren Ausführungsform einer Kraftfahrzeugbaugruppe;
- Fig. 3: eine Seitenansicht einer weiteren Ausführungsform einer Kraftfahrzeugbaugruppe;
- Fig. 4: eine Seitenansicht einer weiteren Ausführungsform einer Kraftfahrzeugbaugruppe;
- Fig. 5: eine Seitenansicht einer weiteren Ausführungsform einer Kraftfahrzeugbaugruppe;
- Fig. 6: eine perspektivische Ansicht der Kraftfahrzeugbaugruppe gemäß Fig. 5;
- Fig. 7: eine Seitenansicht einer weiteren Ausführungsform einer Kraftfahrzeugbaugruppe; und
- Fig. 8: eine perspektivische Ansicht der Kraftfahrzeugbaugruppe gemäß Fig. 7.

Ausführungsformen von Kraftfahrzeugbaugruppen sind in der Zeichnung insgesamt mit dem Bezugszeichen 10 bezeichnet. Die Kraftfahrzeugbaugruppen umfassen eine Profilleiste 12 mit einem ersten Verbindungsbereich 14 zur Verbindung mit einem Randbereich 16 einer Windschutzscheibe 18.

Die Kraftfahrzeugbaugruppe 10 umfasst ferner ein an die Windschutzscheibe 18 angrenzendes Kraftfahrzeugbauteil 20. Bei dem Kraftfahrzeugbauteil 20 handelt es sich insbesondere um die Abdeckung eines Wasserkastens eines Kraftfahrzeugs.

Die Profilleiste 12 weist einen zweiten Verbindungsbereich 22 auf, der zur Verbindung mit einer Versteifungsleiste 24 dient.

Die Versteifungsleiste 24 weist einen in den zweiten Verbindungsbereich der Profilleiste 12 eingesteckten Einsteckabschnitt 26 zum dauerhaften Verbleib in dem zweiten Verbindungsbereich 22 auf und ferner einen Verbindungsabschnitt 28 zur Verbindung mit dem angrenzenden Kraftfahrzeugbauteil 20.

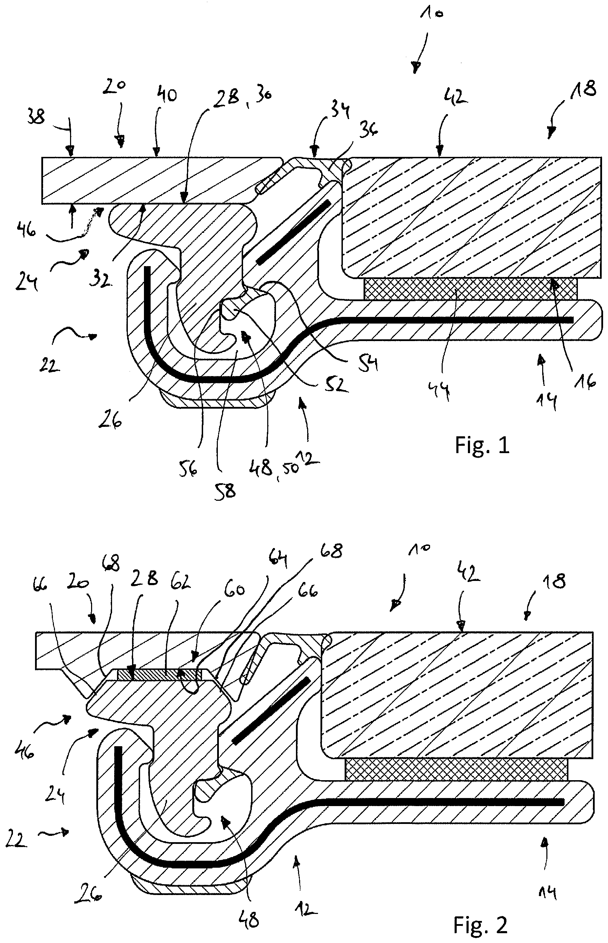

Bei dem Verbindungsabschnitt 28 des Ausführungsbeispiels gemäß Figur 1 handelt es sich um einen Stoffschlussabschnitt 30, der mit einem Stoffschlussabschnitt 32 des angrenzenden Kraftfahrzeugbauteils 20 stoffschlüssig verbunden, insbesondere verschweißt, ist.

Der Verbindungsabschnitt 28 ist relativ zu einer Außendichtfläche 34 eines Dichtabschnitts 36 der Profilleiste 12 zurückversetzt, wobei das Maß der Versetzung einer Dicke 38 eines Randbereichs des Kraftfahrzeugbauteils 20 entspricht. Auf diese Weise ist eine Außenfläche 40 des angrenzenden Kraftfahrzeugbauteils 20 auf derselben Höhe angeordnet wie die Außendichtfläche 34. Diese Flächen bilden gemeinsam mit einer Außenfläche 42 der Windschutzscheibe 18 eine flächenbündige, ebene Anordnung.

Die Profilleiste 12 ist in an sich bekannter Art und Weise mittels einer Verklebung 44 mit dem Randbereich 16 der Windschutzscheibe 18 verklebt. Bei dem Randbereich 16 handelt es sich insbesondere um den in Einbaulage an einem Kraftfahrzeug unteren Randbereich der Windschutzscheibe 18.

Eine Verbindung zwischen der Versteifungsleiste 24 und dem angrenzenden Kraftfahrzeugbauteil 20 wird - mit Gültigkeit für alle Ausführungsformen - insgesamt als "erste Verbindungseinrichtung 46" bezeichnet. Eine Verbindung zwischen der Versteifungsleiste 24 und der Profilleiste 12 wird - mit Gültigkeit für alle Ausführungsformen - insgesamt als "zweite Verbindungseinrichtung 48" bezeichnet.

Bevorzugt ist es, dass die zweite Verbindungseinrichtung 48 eine Rastverbindung 50 umfasst, welche zwischen dem Einsteckabschnitt 26 und dem zweiten Verbindungsbereich 22 wirksam ist.

Die Rastverbindung 50 weist vorzugsweise ein an der Profilleiste 12 festgelegtes, widerhakenförmiges Rastelement 52 auf, das an einem Hinterschnittbereich 54 der Profilleiste 12 festgelegt ist und rastend mit einer Rastelementaufnahme 56 des Einsteckabschnitts 26 zusammenwirkt.

Zum Fügen der Versteifungsleiste 24 mit dem zweiten Verbindungsbereich 22 wird der Einsteckabschnitt 26 in einen etwa U-förmigen Aufnahmeraum 58 des zweiten Verbindungsbereichs 22 eingesteckt, bis die Rastelementaufnahme 56 mit dem Rastelement 52 verrastet ist. In diesem Zustand ist der Einsteckabschnitt 26 in dem Aufnahmeraum 58 aufgenommen.

Der Verbindungsabschnitt 28 ist außerhalb des Aufnahmeraums 58 angeordnet und zur dauerhaften Verbindung mit dem angrenzenden Kraftfahrzeugbauteil 20 ausgebildet.

Nachfolgend werden unter Bezugnahme auf Figuren 2 bis 8 weitere Ausführungsformen von Kraftfahrzeugbaugruppen 10 beschrieben. Die jeweiligen Besonderheiten der Kraftfahrzeugbaugruppen gemäß Figuren 2 bis 8 bestehen in der Konstruktion der ersten Verbindungseinrichtung 46, die zwischen der Versteifungsleiste 24 und dem angrenzenden Kraftfahrzeugbauteil 20 wirksam ist. Im Übrigen wird hinsichtlich der Ausführungsform gemäß Figur 2 bis 8 auf die vorstehende Beschreibung zu der Ausführungsform gemäß Figur 1 Bezug genommen.

Die erste Verbindungseinrichtung 46 der Kraftfahrzeugbaugruppe 10 gemäß Figur 2 umfasst ein Zwischenelement 60 in Form eines Verklebungsabschnitts 62, insbesondere in Form eines doppelseitig wirkenden Klebebands. Der Verklebungsabschnitt 62 ist mittels einer ersten Verklebungsseite mit dem Verbindungsabschnitt 28 der Versteifungsleiste 24 verklebt. Ferner ist der Verklebungsabschnitt 62 mittels einer der ersten Verklebungsseite abgewandten Verklebungsseite mit einem Verbindungsabschnitt 64 des Kraftfahrzeugbauteils 20 verklebt.

Zur Vereinfachung der Montage des Kraftfahrzeugbauteils 20 an der Versteifungsleiste 24 und zur Vereinfachung der Verbindung dieser Bauteile weist die Versteifungsleiste 24 Formschlussabschnitte 66 auf, welche beispielsweise als relativ zueinander geneigte Formschlussflächen ausgebildet sind. Die Formschlussabschnitte 66 wirken mit hierzu komplementären Formschlussflächen 68 des Kraftfahrzeugbauteils 20 zusammen. Im Zuge der Montage des Kraftfahrzeugbauteils 20 an der Versteifungsleiste 24 unterstützen die Formschlussflächen 66 und 68 eine Relativpositionierung des Kraftfahrzeugbauteils 20 und der Versteifungsleiste 24. Der Formschluss zwischen den Formschlussflächen 66 und 68 ist in einer Formschlussebene wirksam, welche sich parallel zu der Außenfläche 42 der Windschutzscheibe 18 erstreckt (vergleiche Figur 2).

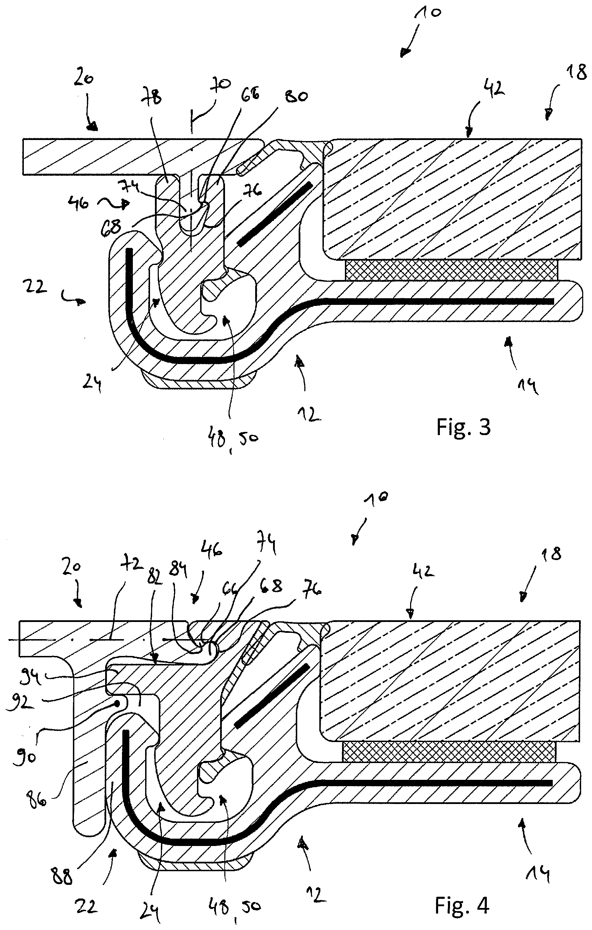

Die Formschlussabschnitte 66 und 68 können auch gemeinsam miteinander einen Hinterschnitt bilden, vgl. Figuren 3 und 4. Die Formschlussabschnitte 66 und 68 sind insbesondere miteinander verrastbar. Dabei ist es möglich, dass eine Rastebene 70, in welcher die miteinander zu verrastenden Formschlussabschnitte 66 und 68 miteinander gefügt werden, winklig, insbesondere senkrecht, zu der Außenfläche 42 der Windschutzscheibe 18 orientiert ist (vgl. Figur 3) oder aber weitestgehend parallel hierzu (vgl. Figur 4).

Bei der Rastverbindung gemäß Figur 3 umfasst das Kraftfahrzeugbauteil 20 einen Rasthaken oder eine Rastleiste 74, welcher in einer Rastelementaufnahme 76 der Versteifungsleiste 24 rastend aufgenommen ist. Dabei ist die Rastaufnahme 76 durch zwei zueinander parallele Schenkel 78 und 80 der Versteifungsleiste 24 begrenzt.

Bei der Ausführungsform gemäß Figur 4 ist die Rastelementaufnahme 76 zwischen einer Auflagefläche 82 und einem Übergriff 84 der Versteifungsleiste 24 ausgebildet.

Zur weiter verbesserten Fixierung des Kraftfahrzeugbauteils 20 an der Verstärkungsleiste 24 und der Profilleiste 12 weist das Kraftfahrzeugbauteil 20 gemäß Fig. 4 einen Steg 86 auf, der im montierten Zustand des Kraftfahrzeugbauteils 20 an einem freien Federschenkel 88 der Profilleiste 12 anliegt.

Zur weiter optimierten Befestigung des Kraftfahrzeugbauteils 20 weist dieses einen Vorsprung 90 auf, der in einen Freiraum 92 zwischen dem freien Ende des Federschenkels 88 und einem Steg 94 der Verstärkungsleiste 24 hineinragt und den Steg 94 reib- und/oder formschlüssig hintergreift (vergleiche Fig. 4).

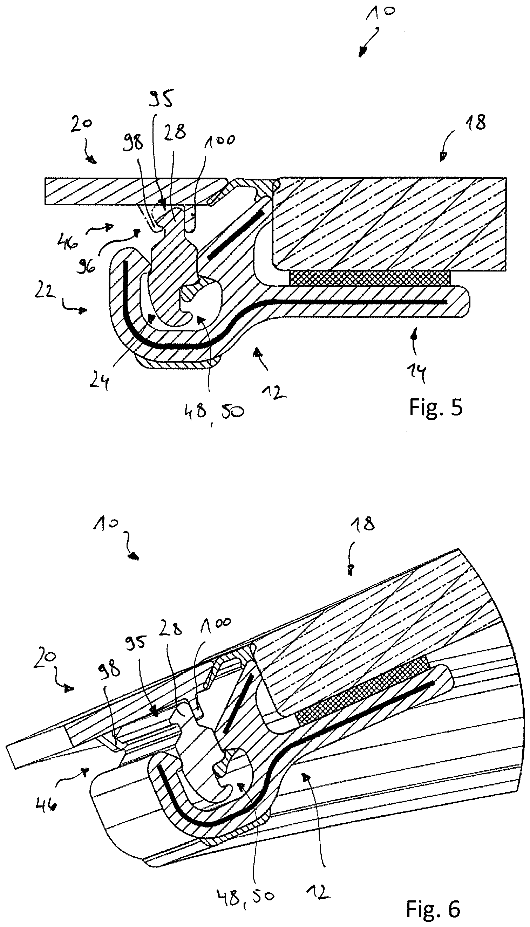

Bei den ersten Verbindungseinrichtungen 46 der Ausführungsformen gemäß Figuren 5 bis 8 weisen die jeweiligen Verbindungsabschnitte 28 der Versteifungsleiste 24 Rastelemente 95 auf, die mit einer Rastelementaufnahme 96 des Kraftfahrzeugbauteils 20 verrastet sind und insbesondere kugelkopf-, pilz-, harpunen- oder tannenbaumförmig ausgebildet sind.

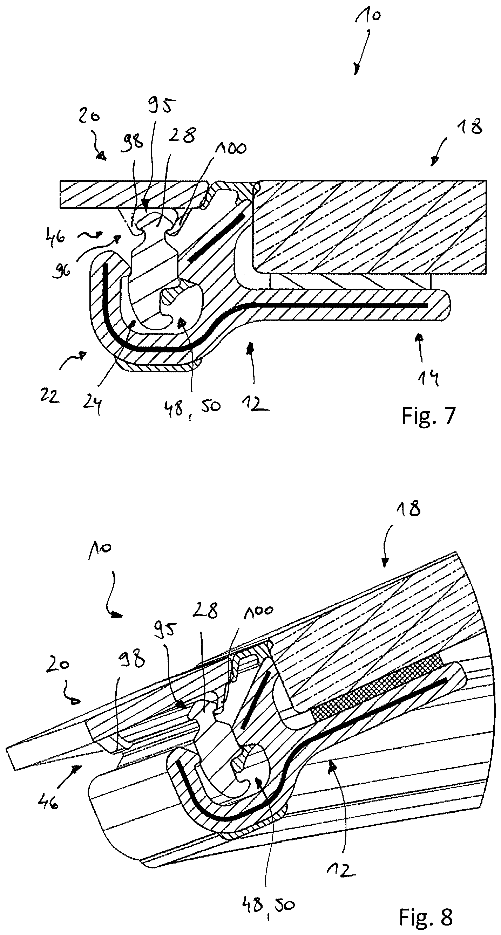

Vorzugsweise umfasst die Rastelementaufnahme 96 zwei auf einander abgewandten Seiten des Verbindungsabschnitts 28 angeordnete Materialabschnitte 98 und 100. Dabei ist es möglich, dass nur einer der Materialabschnitte, beispielsweise der Materialabschnitt 98, als Rasthaken ausgebildet ist und der andere Materialabschnitt, beispielsweise der Materialabschnitt 100, als Anlageabschnitt zur Anlage des Verbindungsabschnitts 28 ausgebildet ist, vgl. Figuren 5 und 6. Es ist aber auch möglich, dass beide Materialabschnitte 98 und 100 jeweils als Rasthaken ausgebildet sind, vgl. Figuren 7 und 8.

Ferner ist es möglich, dass zumindest einer der Materialabschnitte 98, 100 sich entlang der gesamten Länge der Profilleiste 12 erstreckt. Ferner ist es möglich, dass zumindest einer der Materialabschnitte 98, 100 bezogen auf die Erstreckungsrichtung der Profilleiste 12 eine begrenzte Länge von beispielsweise mehreren Millimetern aufweist, vgl. Figuren 6 und 8, siehe Materialabschnitt 98.

Es versteht sich, dass vorstehend unter Bezugnahme auf Figuren 2 bis 8 beschriebene Formschlussabschnitte 66, 68 und/oder Materialabschnitte 98, 100 und/oder Rastelemente 95 bzw. Rastelementaufnahmen 96 bezogen auf ihre Anordnung an der Versteifungsleiste 24 bzw. an dem angrenzenden Kraftfahrzeugbauteil 20 auch jeweils kinematisch umgekehrt angeordnet sein können.

## Patentansprüche

1. Profilleistenanordnung, umfassend eine Profilleiste (12) mit einem ersten Verbindungsbereich (14) zur Verbindung mit einem Randbereich (16) einer Windschutzscheibe (18) eines Kraftfahrzeugs und mit einem zweiten Verbindungsbereich (22) zur Verbindung mit einem an die Windschutzscheibe (18) angrenzenden Kraftfahrzeugbauteil (20), ferner umfassend eine mit der Profilleiste (12) verbundene Versteifungsleiste (24), wobei die Versteifungsleiste (24) einen Einsteckabschnitt (26) zum Einstecken in den und dauerhaften Verbleib in dem zweiten Verbindungsbereich (22) und einen Verbindungsabschnitt (28) zur Verbindung mit dem angrenzenden Kraftfahrzeugbauteil (20) aufweist, **dadurch gekennzeichnet, dass** die Versteifungsleiste (24) lösbar mit der Profilleiste (12) verbunden ist, dass das angrenzende Kraftfahrzeugbauteil (20) als Wasserkastenabdeckung ausgebildet ist, dass in einem unmontierten Zustand der Profilleistenanordnung der Einsteckabschnitt (26) der Versteifungsleiste (24) in seinem in den zweiten Verbindungsbereich (22) eingesteckten Zustand einen Transportschutz für den zweiten Verbindungsbereich (22) der Profilleiste (12) bildet und dass in einem an einem Kraftfahrzeug montierten Zustand der Profilleistenanordnung die Versteifungsleiste (24) eine Anordnung zur Verbindung der Wasserkastenabdeckung mit der Profilleiste (12) bildet.

2. Profilleistenanordnung nach einem der voranstehenden Ansprüche, **dadurch gekennzeichnet, dass** die Versteifungsleiste (24) keinen Handhabungsabschnitt zum Lösen der Versteifungsleiste (24) von der Profilleiste (12) aufweist.

3. Profilleistenanordnung nach einem der voranstehenden Ansprüche, **dadurch gekennzeichnet, dass** der Einsteckabschnitt (26) mittels einer Rastverbindung (50) in dem zweiten Verbindungsbereich (22) festgelegt ist.

4. Profilleistenanordnung nach Anspruch 3, **dadurch gekennzeichnet, dass** die Rastverbindung (50) ein an der Profilleiste (12) festgelegtes, widerhakenförmiges Rastelement (52) umfasst, das mit einer Rastelementaufnahme (56) der Versteifungsleiste (24) zusammenwirkt.

5. Profilleistenanordnung nach einem der voranstehenden Ansprüche, **dadurch gekennzeichnet, dass** der Verbindungsabschnitt (28) einen Stoffschlussabschnitt (30) zur stoffschlüssigen Verbindung mit dem angrenzenden Kraftfahrzeugbauteil (20) aufweist.

6. Profilleistenanordnung nach einem der voranstehenden Ansprüche, **dadurch gekennzeichnet, dass** der Verbindungsabschnitt (28) mit einem Zwischenelement (60) verbunden ist, das mit dem angrenzenden Kraftfahrzeugbauteil (20) verbindbar ist.

7. Profilleistenanordnung nach Anspruch 6, **dadurch gekennzeichnet, dass** das Zwischenelement (60) einen Verklebungsabschnitt (62) umfasst oder durch einen solchen gebildet ist.

8. Profilleistenanordnung nach Anspruch 7, **dadurch gekennzeichnet, dass** der Verklebungsabschnitt (62) mit dem angrenzenden Kraftfahrzeugbauteil (20) verklebbar ist.

9. Profilleistenanordnung nach Anspruch 7 oder 8, **dadurch gekennzeichnet, dass** eine von dem Verklebungsabschnitt (62) abziehbare Abdeckschicht vorgesehen ist.

10. Profilleistenanordnung nach einem der voranstehenden Ansprüche, **dadurch gekennzeichnet, dass** der Verbindungsabschnitt (28) der Versteifungsleiste (24) einen Formschlussabschnitt (66) zur formschlüssigen Verbindung mit dem angrenzenden Kraftfahrzeugbauteil (20) oder mit einem mit dem angrenzenden Kraftfahrzeugbauteil (20) verbindbaren Zwischenelement (60) aufweist.

11. Montagebaugruppe, umfassend eine Profilleistenanordnung nach einem der voranstehenden Ansprüche und eine Windschutzscheibe (18).

12. Kraftfahrzeugbaugruppe (10), umfassend eine Profilleistenanordnung nach einem der Ansprüche 1 bis 10 oder eine Montagebaugruppe nach Anspruch 11, ferner umfassend ein angrenzendes Kraftfahrzeugbauteil (20) in Form einer Wasserkastenabdeckung.

13. Kraftfahrzeugbaugruppe (10) nach Anspruch 12, **dadurch gekennzeichnet, dass** der Verbindungsabschnitt (28) der Versteifungsleiste (24) und das angrenzende Kraftfahrzeugbauteil (20) miteinander stoffschlüssig verbunden sind.

14. Kraftfahrzeugbaugruppe (10) nach Anspruch 12 oder 13, **dadurch gekennzeichnet, dass** - in dem in den zweiten Verbindungsbereich (22) eingesteckten Zustand des Einsteckabschnitts (26) - der Verbindungsabschnitt (28) der Versteifungsleiste (24) relativ zu einer Außendichtfläche (34) der Profilleiste (12) zurückversetzt ist, wobei - in dem mit der Profilleiste (12) verbundenen Zustand des angrenzenden Kraftfahrzeugbauteils (20) - eine Außenfläche (40) des Kraftfahrzeugbauteils (20) und die Außendichtfläche (34) auf gleicher Höhe angeordnet sind.

15. Kraftfahrzeugbaugruppe (10) nach einem der Ansprüche 12 bis 14, **dadurch gekennzeichnet, dass** der Verbindungsabschnitt (28) mit einem Zwischenelement (60) verbunden ist, das mit dem angrenzenden Kraftfahrzeugbauteil (20) verbunden ist.

16. Kraftfahrzeugbaugruppe (10) nach Anspruch 15, **dadurch gekennzeichnet, dass** das Zwischenelement (60) einen Verklebungsabschnitt (62) umfasst oder durch einen solchen gebildet ist.

17. Kraftfahrzeugbaugruppe (10) nach einem der Ansprüche 12 bis 16, **dadurch gekennzeichnet, dass** der Verbindungsabschnitt (28) der Versteifungsleiste (24) formschlüssig verbunden ist mit dem angrenzenden Kraftfahrzeugbauteil (20) oder mit einem Zwischenelement (60), das mit dem angrenzenden Kraftfahrzeugbauteil (20) verbunden ist.

18. Kraftfahrzeugbaugruppe (10) nach einem der Ansprüche 12 bis 17, **dadurch gekennzeichnet, dass** das angrenzende Kraftfahrzeugbauteil (20) und die Versteifungsleiste (24) mittels einer ersten Verbindungseinrichtung (46) miteinander verbunden sind und dass die erste Verbindungseinrichtung (46) und eine zwischen dem Einsteckabschnitt (26) der Versteifungsleiste (24) und dem zweiten Verbindungsbereich (22) der Profilleiste (12) wirksame zweite Verbindungseinrichtung (48) derart ausgelegt sind, dass eine Betätigungskraft zum Lösen der ersten Verbindungseinrichtung (46) höher ist als eine Betätigungskraft zum Lösen der zweiten Verbindungseinrichtung (48).

19. Kraftfahrzeugbaugruppe (10) nach Anspruch 18, **dadurch gekennzeichnet, dass** die erste Verbindungseinrichtung (46) nicht zerstörungsfrei lösbar ist.

20. Verfahren zur Montage einer Kraftfahrzeugbaugruppe (10) nach einem der Ansprüche 12 bis 19, wobei
- der Einsteckabschnitt (26) der Versteifungsleiste (24) in den zweiten Verbindungsbereich (22) der Profilleiste (12) eingesteckt wird, nachdem oder bevor die Profilleiste (12) mit einem Randbereich (16) einer Windschutzscheibe (18) verbunden wird, und **dadurch gekennzeichnet, dass** anschließend
- das angrenzende Kraftfahrzeugbauteil (20) in Form der Wasserkastenabdeckung mit der Versteifungsleiste (24) verbunden wird.

21. Verfahren nach Anspruch 20, wobei das angrenzende Kraftfahrzeugbauteil (20) mit der Versteifungsleiste (24) verbunden wird, nachdem oder bevor die Windschutzscheibe (18) mit einer Windschutzscheibenaufnahme des Kraftfahrzeugs verbunden wird.

## Claims

1. A profile strip arrangement comprising a profile strip (12) having a first connecting area (14) that serves to establish a connection to an edge area (16) of a windshield (18) of a motor vehicle and having a second connecting area (22) that serves to establish a connection to a vehicle part (20) that is adjacent to the windshield (18), also comprising a reinforcement strip (24) that is connected to the profile strip (12), wherein the reinforcement strip (24) has an insertion section (26) that is to be inserted into and remain permanently in the second connecting area (22), and it also has a connecting section (28) that serves to establish a connection to the adjacent vehicle part (20), **characterized in that** the reinforcement strip (24) is detachably connected to the profile strip (12), **in that** the adjacent vehicle part (20) is a water trough cover, **in that**, when the profile strip arrangement is in an unassembled state, the insertion section (26) of the reinforcement strip (24), in the state in which it is inserted into the second connecting area (22), constitutes a transport protection for the second connecting area (22) of the profile strip (12), and **in that**, when the profile strip arrangement is in an assembled state on the motor vehicle, the reinforcement strip (24) forms an arrangement that serves to establish a connection of the water trough cover to the profile strip (12) .

2. The profile strip arrangement according to one of the preceding claims, **characterized in that** the reinforcement strip (24) does not have a handling section that would serve to detach the reinforcement strip (24) from the profile strip (12).

3. The profile strip arrangement according to one of the preceding claims, **characterized in that** the insertion section (26) is secured in the second connecting area (22) by means of a latching connection (50).

4. The profile strip arrangement according to claim 3, **characterized in that** the latching connection (50) comprises a barb-shaped latching element 52 that is configured on the profile strip (12) and that interacts with a latching element receptacle (56) of the reinforcement strip (24).

5. The profile strip arrangement according to one of the preceding claims, **characterized in that** the connecting section (28) has an integral bonding section (30) that serves to establish an integrally bonded connection to the adjacent vehicle part (20).

6. The profile strip arrangement according to one of the preceding claims, **characterized in that** the connecting section (28) is connected to an intermediate element (60) that can be connected to the adjacent vehicle part (20).

7. The profile strip arrangement according to claim 6, **characterized in that** the intermediate element (60) comprises an adhesive section (62) or consists of such an adhesive section (62).

8. The profile strip arrangement according to claim 7, **characterized in that** the adhesive section (62) can be glued to the adjacent vehicle part (20).

9. The profile strip arrangement according to claim 7 or 8, **characterized in that** a cover layer that can be peeled off from the adhesive section (62) is provided.

10. The profile strip arrangement according to one of the preceding claims, **characterized in that** the connecting section (28) of the reinforcement strip (24) has a positive-connection section (66) that serves to establish a positive connection to the adjacent vehicle part (20) or to an intermediate element (60) that can be connected to the adjacent vehicle part (20).

11. An assembly module comprising a profile strip arrangement according to one of the preceding claims and a windshield (18) .

12. A vehicle module (10) comprising a profile strip arrangement according to one of claims 1 to 10 or an assembly module according to claim 11, also comprising an adjacent vehicle part (20) formed by a water trough cover.

13. The vehicle module (10) according to claim 12, **characterized in that** the connecting section (28) of the reinforcement strip (24) and the adjacent vehicle part (20) are integrally bonded to each other.

14. The vehicle module (10) according to claim 12 or 13, **characterized in that** - in the state in which the insertion section (26) is inserted into the second connecting area (22) - the connecting section (28) of the reinforcement strip (24) is recessed relative to an outer sealing surface (34) of the profile strip (12), whereby - in the state in which the adjacent vehicle part (20) is connected to the profile strip (12) - an outer surface (40) of the vehicle part (20) and the outer sealing surface (34) are arranged at the same height.

15. The vehicle module (10) according to one of claims 12 to 14, **characterized in that** the connecting section (28) is connected to an intermediate element (60) that is connected to the adjacent vehicle part (20).

16. The vehicle module (10) according to claim 15, **characterized in that** the intermediate element (60) comprises an adhesive section (62) or consists of such an adhesive section (62).

17. The vehicle module (10) according to one of claims 12 to 16, **characterized in that** the connecting section (28) of the reinforcement strip (24) is positively connected to the adjacent vehicle part (20) or to an intermediate element (60) that is connected to the adjacent vehicle part (20).

18. The vehicle module (10) according to one of claims 12 to 17, **characterized in that** the adjacent vehicle part (20) and the reinforcement strip (24) are connected to each other by means of a first connecting means (46), and **in that** the first connecting means (46) and a second connecting means (48) that is active between the insertion section (26) of the reinforcement strip (24) and the second connecting area (22) of the profile strip (12) are configured in such a way that an actuation force to detach the first connecting means (46) is higher than an actuation force to detach the second connecting means (48).

19. The vehicle module (10) according to claim 18, **characterized in that** the first connecting means (46) cannot be detached non-destructively.

20. A method to assemble a vehicle module (10) according to one of claims 12 to 19, wherein the insertion section (26) of the reinforcement strip (24) is inserted into the second connecting area (22) of the profile strip (12) after or before the profile strip (12) is connected to an edge area (16) of a windshield (18),
and **characterized in that** subsequently,
- the adjacent vehicle part (20) formed by the water trough cover is connected to the reinforcement strip (24).

21. The method according to claim 20, whereby the adjacent vehicle part (20) is connected to the reinforcement strip (24) after or before the windshield (18) is connected to a windshield receptacle of the motor vehicle.

## Revendications

1. Ensemble de baguette profilée comprenant une baguette profilée (12) ayant une première zone de liaison (14) destinée à être reliée à une zone de bord (16) d'un pare-brise (18) d'un véhicule automobile ainsi qu'une deuxième zone de liaison (22) destinée à être reliée à un composant de véhicule automobile (20) adjacent au pare-brise (18), comprenant en outre une baguette de rigidification (24) reliée à la baguette profilée (12), dans laquelle la baguette de rigidification (24) présente un tronçon d'engagement (26) destiné à être engagé et à rester de manière permanente dans la deuxième zone de liaison (22) et un tronçon de liaison (28) destiné à être relié au composant de véhicule automobile (20) adjacent, **caractérisé par le fait que** la baguette de rigidification (24) est reliée de manière amovible à la baguette profilée (12), que le composant de véhicule automobile (20) adjacent est conçu en tant que couverture de réservoir d'eau, que, dans un état non monté de l'ensemble de baguette profilée, ledit tronçon d'engagement (26) de la baguette de rigidification (24) forme une protection de transport pour la deuxième zone de liaison (22) de la baguette profilée (12), lorsqu'il est dans son état où il est engagé dans la deuxième zone de liaison (22), et que, dans un état où ledit ensemble de baguette profilée est monté sur un véhicule automobile, la baguette de rigidification (24) forme un ensemble destiné à relier ladite couverture de réservoir d'eau à la baguette profilée (12).

2. Ensemble de baguette profilée selon l'une quelconque des revendications précédentes, **caractérisé par le fait que** la baguette de rigidification (24) ne présente pas de tronçon de manipulation pour détacher la baguette de rigidification (24) de la baguette profilée (12).

3. Ensemble de baguette profilée selon l'une quelconque des revendications précédentes, **caractérisé par le fait que** le tronçon d'engagement (26) est fixé au moyen d'une liaison par encliquetage (50) dans la deuxième zone de liaison (22).

4. Ensemble de baguette profilée selon la revendication 3, **caractérisé par le fait que** la liaison par encliquetage (50) comprend un élément d'arrêt (52) en forme de barbillon qui est fixé sur la baguette profilée (12) et qui agit de concret avec un logement d'arrêt (56) de la baguette de rigidification (24).

5. Ensemble de baguette profilée selon l'une quelconque des revendications précédentes, **caractérisé par le fait que** le tronçon de liaison (28) présente un tronçon de liaison de matière (30) pour la jonction par liaison de matière audit composant de véhicule automobile (20) adjacent.

6. Ensemble de baguette profilée selon l'une quelconque des revendications précédentes, **caractérisé par le fait que** le tronçon de liaison (28) est relié à un élément intermédiaire (60) qui peut être relié au composant de véhicule automobile (20) adjacent.

7. Ensemble de baguette profilée selon la revendication 6, **caractérisé par le fait que** ledit élément intermédiaire (60) comprend un tronçon de collage (62) ou est formé par un tel tronçon de collage.

8. Ensemble de baguette profilée selon la revendication 7, **caractérisé par le fait que** le tronçon de collage (62) peut être collé avec le composant de véhicule automobile (20) adjacent.

9. Ensemble de baguette profilée selon la revendication 7 ou 8, **caractérisé par le fait qu'**une couche de revêtement apte à être pelée du tronçon de collage (62) est prévue.

10. Ensemble de baguette profilée selon l'une quelconque des revendications précédentes, **caractérisé par le fait que** le tronçon de liaison (28) de la baguette de rigidification (24) présente un tronçon à engagement positif (66) pour la liaison à engagement positif audit composant de véhicule automobile (20) adjacent ou à un élément intermédiaire (60) apte à être relié au composant de véhicule automobile (20) adjacent.

11. Ensemble de montage comprenant un ensemble de baguette profilée selon l'une quelconque des revendications précédentes et un pare-brise (18).

12. Ensemble de véhicule automobile (10), comprenant un ensemble de baguette profilée selon l'une quelconque des revendications 1 à 10 ou un ensemble de montage selon la revendication 11, comprenant en outre un composant de véhicule automobile (20) adjacent sous la forme d'une couverture de réservoir d'eau.

13. Ensemble de véhicule automobile (10) selon la revendication 12, **caractérisé par le fait que** le tronçon de liaison (28) de la baguette de rigidification (24) et le composant de véhicule automobile (20) adjacent sont reliés l'un à l'autre par liaison de matière.

14. Ensemble de véhicule automobile (10) selon la revendication 12 ou 13, **caractérisé par le fait que** - dans l'état où le tronçon d'engagement (26) est engagé dans la deuxième zone de liaison (22) - le tronçon de liaison (28) de la baguette de rigidification (24) est en retrait par rapport à une surface d'étanchéité extérieure (34) de la baguette profilée (12), dans lequel - dans l'état où le composant de véhicule automobile (20) adjacent est relié à la baguette profilée (12) - une surface extérieure (40) du composant de véhicule automobile (20) et la surface d'étanchéité extérieure (34) sont disposées à la même hauteur.

15. Ensemble de véhicule automobile (10) selon l'une quelconque des revendications 12 à 14, **caractérisé par le fait que** le tronçon de liaison (28) est relié à un élément intermédiaire (60) qui est relié au composant de véhicule automobile (20) adjacent.

16. Ensemble de véhicule automobile (10) selon la revendication 15, **caractérisé par le fait que** ledit élément intermédiaire (60) comprend un tronçon de collage (62) ou est formé par un tel tronçon de collage.

17. Ensemble de véhicule automobile (10) selon l'une quelconque des revendications 12 à 16, **caractérisé par le fait que** le tronçon de liaison (28) de la baguette de rigidification (24) est relié à engagement positif au composant de véhicule automobile (20) adjacent ou à un élément intermédiaire (60) qui est relié au composant de véhicule automobile (20) adjacent.

18. Ensemble de véhicule automobile (10) selon l'une quelconque des revendications 12 à 17, **caractérisé par le fait que** le composant de véhicule automobile (20) adjacent et la baguette de rigidification (24) sont reliés entre eux au moyen d'un premier dispositif de liaison (46) et que le premier dispositif de liaison (46) et un deuxième dispositif de liaison (48) agissant entre le tronçon d'engagement (26) de la baguette de rigidification (24) et la deuxième zone de liaison (22) de la baguette profilée (12) sont conçus de telle sorte qu'une force d'actionnement pour libérer le premier dispositif de liaison (46) est supérieure à une force d'actionnement pour libérer le deuxième dispositif de liaison (48).

19. Ensemble de véhicule automobile (10) selon la revendication 18, **caractérisé par le fait que** le premier dispositif de liaison (46) ne peut pas être libéré sans être détruit.

20. Procédé de montage d'un ensemble de véhicule automobile (10) selon l'une quelconque des revendications 12 à 19, dans lequel
- le tronçon d'engagement (26) de la baguette de rigidification (24) est engagé dans la deuxième zone de liaison (22) de la baguette profilée (12) après ou avant que la baguette profilée (12) est/soit reliée à une zone de bord (16) d'un pare-brise (18),
et **caractérisé par le fait que**, ensuite,
- le composant de véhicule automobile (20) adjacent sous la forme de la couverture de réservoir d'eau est relié à la baguette de rigidification (24).

21. Procédé selon la revendication 20, dans lequel le composant de véhicule automobile (20) adjacent est relié à la baguette de rigidification (24) après ou avant que le pare-brise (18) est/soit relié à un logement de pare-brise du véhicule automobile.
